Europäisches Patentamt

European Patent Office

Office européen des brevets

(19)

(11) Publication number: **0 004 175**
A1

# EUROPEAN PATENT APPLICATION

(12)

(21) Application number: **79300335.1**

(22) Date of filing: **06.03.79**

(51) Int. Cl.²: **C 08 L 101/00**
//C08L9/02, C08L75/04,
(C08L101/00, 27/06, 23/28,
C08K3/22, 5/02)

(30) Priority: **13.03.78 US 886022**

(43) Date of publication of application:
**19.09.79 Bulletin 79/19**

(84) Designated contracting states:
**DE GB IT**

(71) Applicant: **UNIROYAL, INC.**
**1230 Avenue of the Americas Rockefeller Center**
**New York, NY 100200(US)**

(72) Inventor: **Jacobs, Martin Irwing**
**R.D. 2 Strongtown Road**
**Southbury New Haven Connecticut(US)**

(74) Representative: **Harrison, Michael Robert et al,**
**Urquhart-Dykes & Lord Tower House Merrion Way**
**Leeds LS2 8PB(GB)**

(54) Smoke retarded polymers and method for preparing them.

(57)  ı ne addition of zinc oxide to elastomeric polymers containing halogen-containing organic compounds results in reduced smoke generation under burning conditions.

EP 0 004 175 A1

Croydon Printing Company Ltd.

## SMOKE RETARDED POLYMERS

The present invention relates to compositions comprising elastomeric polymers and halogen-containing organic compounds that exhibit substantially reduced smoke generation upon burning as a result of the presence therein of a smoke retarding amount of zinc oxide.

Synthetic materials undergoing forced combustion emit smoke and toxic gases that are dangerous fire hazards because they impair escape, produce injury, limit survival and hamper fire fighting efforts. The latest statistics indicate that about half of the fatalities from accidental fires are caused by smoke rather than by heat or actual burning, thus emphasizing the need for the development of synthetic organic materials with as minimal smoke generating properties as possible. This is especially true for such materials used in aircraft, watercraft, motor vehicles, and house interiors, as well as for furniture and the like. It is, therefore, of great importance to provide a smoke retardant for compositions comprising elastomeric polymers and halogen-containing organic compounds. Such compositions would be particularly useful for sheathing wire and cable.

Zinc oxide is well known and widely used as a component of the curative systems for many elastomers. However, it is generally used at relatively low concentrations, i.e., about 5 parts or less by weight of zinc oxide per hundred parts by weight of elastomer.

Zinc oxide, as well as other zinc compounds, has also been described as a smoke retardant for a variety of polymers, including polyvinyl chloride, chlorinated polyester, polystyrene, acrylonitrile/butadiene/styrene terpolymers, and polypropylene. See for example U. S. Patent 3,996,142; French Patent 2,236,893; U. S. Patent 3,945,974; U. S. Patent 3,900,441; U. S. Patent 3,957,723; and U. S. Serial No. 638,404, filed December 8, 1975.

In most of the prior art examples, zinc compounds are used in compositions where the halogen-containing organic compound is the only, or major, polymeric component. In cases where zinc compounds have been used with a halogen material as the minor component, smoke retardation was small (less than 20%). Surprisingly, in the present invention, smoke reductions of greater than 40% are obtained, even though the halogen-containing organic material is a minor component. Smoke inhibition of this magnitude has been previously obtained only when a halogenated polymer was used as the sole polymeric material.

The present invention relates to a composition comprising 90 to 50 parts by weight of an elastomeric polymer component, correspondingly 10 to 50 parts by weight of a halogen-containing organic component, and zinc oxide present in an amount equal to at least 5 parts by weight per hundred parts by weight of said elastomeric polymer component and said halogen-containing organic component. In one of its embodiments, the present invention relates to a method of preparing a composition comprising 90 to 50 parts by weight of an elastomeric polymer component and correspondingly 10 to 50 parts by weight of a halogen-containing organic component, said composition exhibiting substantially reduced smoke generation upon burning, said method comprising adding at least 5 parts by weight of zinc oxide per hundred parts by weight of said elastomeric polymer component and said halogen-containing organic component during formulation of said composition. In another embodiment, the present invention relates to a method of imparting the property of exhibiting substantially reduced smoke generation upon burning to a composition comprising 90 to 50 parts by weight of an elastomeric polymer component and correspondingly 10 to 50 parts by weight of a halogen-containing organic component, said method comprising adding at least 5 parts by weight of zinc oxide per hundred parts by weight of said elastomeric polymer component and said halogen-containing organic component to said composition during formulation of said composition.

The elastomeric polymer component which is used in the aforementioned compositions and methods of the present invention comprises at least one elastomer polymer which does not contain halogen. Examples of such elastomeric polymers are polyurethane and the nitrile elastomers. Exemplary of the polyurethane polymers which are operative in the present invention are those described in "Polyurethane Technology", by Bruins, Interscience Publishers, pages 198-200 and in "Modern Plastics Encyclopedia", 1968, page 289. Examples of such polymers are such polyether based polyurethanes as those made from 1 equivalent of polytetramethylene ether glycol. 2 to 5 equivalents of methylene bis(4-phenyl isocyanate) and 1 to 4 equivalents of 1,4-butane diol; and polyester based polyurethanes such as are similarly derived from 1,4-butane diol-adipic acid polyester and MDI (Rubber Chemistry and Technology, Col. 35, 1962, page 742, Schollenberger et al.). Commercially available materials of this category include Estane (trademark), Texin (trademark) 480-A, Roylar (trademark) E-9. Many such products may be described as reaction products of a polymeric polyol (e.g., a polyester glycol or a polyether glycol) with an organic polyisocyanate (whether aromatic, aliphatic or cycloaliphatic), usually a diisocyanate, frequently along with a low molecular weight bifunctional material having two reactive hydrogens, such as glycol or diamine (see also U. S. Pat. Nos. 3,462,326, Steele et al., August 19, 1969, especially col. 3, lines 1 to 35; also 3,678,129, Fischer, July 18, 1972, col. 8, line 65 to col. 2, line 9 and col. 3, lines 19-30). Thermoplastic polyurethane polymers are high molecular weight materials substantially devoid of olefinic unsaturation wherein essentially all the -NCO groups have reacted with the active hydrogen containing components.

For the preparation of semi-rigid and rigid polyurethanes, polyols having relatively lower molecular weight (e.g., 100) may be employed in part or in whole for the higher molecular weight reactants depending on the degree of semi-rigid or rigid properties desired.

Exemplary of the nitrile elastomers which are operative in the present invention are those which have high unsaturation and which are conventionally vulcanized with sulfur. Such nitrile-elastomers include those which are copolymers of butadiene and acrylic and methacrylic nitriles containing 5 to 50% by weight of nitrile. These elastomers are made in a manner well-known to those skilled in the art, usually by emulsion polymerization, for example in accordance with U. S. Patent No. 1,973,000, and are available under the trademark of Chemigum (Goodyear Chemical Div.), Hycar (Goodrich Chemical) Nysyn (Copolymer Rubber & Chemical) and Paracril (Uniroyal Chemical).

The halogen-containing organic component which is used in the compositions of the present invention comprises at least one halogen-containing organic compound, which may or may not be a polymer. Examples of such compounds are chlorinated paraffins, polyvinyl chloride and chlorinated polyethylene. The halogen content of the halogen-containing organic component should be from about 20 to 75 weight percent.

When chlorinated paraffins are employed in the present invention, their chlorine content is preferably from about 30 to 70 weight percent. An example of a suitable chlorinated paraffin is Chlorowax 70 (trademark).

The polyvinyl chloride resin employed in the invention is a well-known conventional material. It is represented by such commercially available resins as "Marvinol" or "Esso PVC" (trademarks). Frequently the polyvinyl chloride resin employed has a K value (a function used as a measure of molecular weight; see H. Finkents- cher, Cellulosechemie 13, 60 [1932]) from 50 to 79.

The chlorinated polyethylene employed in the present invention is likewise a known material, being a resin produced by chlorination of polyethylene. Various forms of the chlorinated polyethylene resins employed may be described as elastomers having glass transition temperatures of -30°C. to -20°C. and chlorine contents of 25 to 50 weight percent. The mechanical strength of chlorinated polyethylene is a function of the molecular weight of polyethylene used, the degree of residual crystallinity and the arrangement of chlorine atoms on the backbone. Chlorinated polyethylenes are commercially available under the trademark "Tyrin".

The maximum amount of zinc oxide that may be added to the compositions of the present invention is about 50 parts by weight per one hundred parts by weight of composition. Above such a ratio, the physical properties of the composition would become undesirable. Preferably, the compositions of the present invention contain 30 parts by weight, and more preferably 20 parts by weight, of zinc oxide per 100 parts by weight of composition.

Other compounding ingredients may be used in the compositions of the present invention, including light and heat stabilizers, waxes, pigments, blowing agents, flame retardants, other smoke retardants and fillers such as carbon black, silica, barytes, clay, wood flour,

magnesium oxide, calcium carbonate, aluminum oxide trihydrate and the like.

Among the flame retardants usable in the present invention are the Diels-Alder reaction products of 2 moles of hexachlorocyclopentadiene with 1 mole of either 1,5-cyclooctadiene, Furan, 2-vinyl-2-norbornene or 4-vinyl-cylohexene resulting in the formation of 1, 2, 3, 4, 7, 8, 9, 10, 13, 13, 14, 14-dodecachloro-1,4,4a,6a, 7, 10, 10a, 12a-octahydro-1,4:7, 10-dimethanodibenzocyclooctane (DCCO); 1, 2, 3, 4, 5, 6, 7, 8, 10, 10, 11, 11-dodeca-chloro-1,4,4a,4b, 5, 8, 8a, 9a-octahydro-1,4:5,8-di-methanodibenzofuran (DCOB); 6-(1',4',5',6',7',7'-hexa-chloronorborn-5'-en-2'-yl)-1,2,3,4,10,10-hexachloro-1,4, 4a,5,6,7,8,8a-octahydro-1,4:5,8-dimethanonaphthalene (DCDN); or 6-(1',4',5',6',7',7'-hexachloronorborn-5'-en-2'-yl)-1, 2,3,4,10, 10-hexachloro-1,4,4a,5,6,7,8,8a-octahydro-1,4-methanonaphthalene (DCMN). The preparation of these flame retardants is given in U. S. Patent 3,970,716.

These flame retardants are preferably used in the compositions of the present invention in an amount equal to about 10 to 25 parts by weight per 100 parts by weight of elastomer (for example, polyurethane or nitrile rubber). Antimony trioxide ($Sb_2O_3$) may be added to the compositions of the present invention in order to reduce the amount of flame retardant required. When antimony trioxide is included, the amount of the other flame retardant may be reduced to as little as 5 parts by weight per 100 parts by weight of elastomer, provided that the sum of the amounts of antimony trioxide and flame retardant is about 15 to 30,preferably 20 to 25, parts by weight per hundred parts by weight of elastomer.

For elastomers containing polyvinyl chloride, but not for elastomers containing chlorinated polyethylene, as little as 5 parts by weight of antimony trioxide, with no additional flame retardant per 100 parts by weight of elastomer plus polyvinylchloride is required for flame retardance, with 5 to 10 parts by weight of antimony trioxide being preferred.

When antimony trioxide is used as a flame retardant, either by itself or in combination with another of the flame retardants referred to above, additional amounts of antimony trioxide beyond those amounts indicated could be used. However, the use of more than 20 parts by weight of antimony trioxide per 100 parts by weight of composition, would not be preferred because of the expense involved.

The materials used in the illustrative, nonlimiting, examples below were prepared by mixing the components on an electrically-heated two-roll mill. The elastomeric component was added first and fluxed until a uniform band was formed. The additional ingredients were then added and dispersed by standard mill-mixing techniques. The uniformly mixed material was then sheeted off the mill in the form of a blank for compression molding. The blank was placed in a 3" x 6" x 1/16" frame mold, which was in turn placed between the platens of a steam-heated hydraulic press. The heated material was molded under a pressure of 4500 psi for 5 minutes and then cooled in place under pressure.

Smoke testing was carried out on a 3" x 3" x 1/16" sample, cut from the molded material prepared as previously described. Testing was done in the National Bureau of Standards (NBS) Smoke Density Chamber, according to Method NFPA-258. Tests were performed in the flaming mode. The results reported in the following examples represent data from a single determination. In each case, maximum specific optical density of the smoke produced, corrected for soot deposits on optical windows ($D_m$ (corr)) was determined.

When zinc oxide is added to the compositions of the present invention during formulation of said compositions, mixing should take place at a sufficiently high temperature so that the polymers of the composition flow sufficiently and adequate mixing results, but not at such a high temperature that one or more of the polymers becomes degraded.  A temperature range of about 275°F. to 400°F. would be suitable for most polymers. While the pressure is not critical, the pressure should not be so high that excessive shear is created that results in degradation of one or more of the polymers.

## Example I

Samples were mixed and molded according to the procedures described above, using a molding temperature of 340°F.  The results of smoke testing are shown in Table I.

### TABLE I

#### SMOKE SUPPRESSION IN POLYURETHANE/CPE BLENDS

| | | | | |
|---|---|---|---|---|
| Polyurethane Elastomer[1] [4] | 100.0 | 100.0 | 100.0 | 100.0 |
| Chlorinated Polyethylene [2] [4] | 43.0 | 43.0 | 43.0 | 43.0 |
| DCOB [3] [4] | 12.5 | 12.5 | 12.5 | 12.5 |
| Antimony Trioxide [4] | 7.5 | 7.5 | 7.5 | 7.5 |
| Zinc Oxide [4] | 0 | 5.0 | 10.0 | 20.0 |
| Dm (corr.) | 829 | 816 | 712 | 477 |
| Percent smoke reduction | – | 2 | 14 | 42 |

(1)  A urethane polymer based on polytetramethylene ether glycol and diphenylmethane diisocyanate.

(2)  CPE-4814 (Dow Chemical); a chlorinated polyethylene containing 48% chlorine.

(3)  1, 2, 3, 4, 5, 6, 7, 8, 10, 10, 11, 11-dodeca-
chloro-1,4,4a,4b, 5, 8, 8a, 9a-octahydro-1,4:5,
8-dimethanodibenzofuran.

(4)  Parts by weight.

This example shows that no appreciable smoke
retardation is obtained at ZnO concentrations less than
10 parts per hundred.  However, at a ZnO concentration
of 20 parts per hundred, a major smoke reduction is obtained, comparable to effects described for zinc compounds in the presence of halogen polymers alone.

## Example 2

Samples were mixed and molded according to the
procedures described above, using a molding temperature
of 280°F.  The results of smoke testing are shown in
Table II.

## TABLE II

### SMOKE SUPPRESSION IN NBR/PRC BLENDS

| | | | | |
|---|---|---|---|---|
| Butadiene/acrylonitrile elastomer (1) (4) | 45.0 | 45.0 | 45.0 | 45.0 |
| Polyvinylchloride (2) (4) | 45.0 | 45.0 | 45.0 | 45.0 |
| Polymer polyester plasticizer (3) (4) | 10.0 | 10.0 | 10.0 | 10.0 |
| Antimony trioxide (4) | 5.0 | 5.0 | 5.0 | 5.0 |
| Zinc oxide (4) | 0 | 5 | 10 | 20 |
| Dm (corr.) | > 964 (5) | 625 | 588 | 444 |
| % Smoke reduction | 0 | >35 | >39 | >54 |

(1) Prepared from a mixture of butadiene and acrylonitrile containing 32% by weight of acrylonitrile. The elastomer has a Mooney viscosity (ML-4) at 212°F. of 55.

(2) The "K" value is 60 (H. Fikentscher "Cellulosechemie" 13, 60 [1932].)

(3) "Uniflex 320" (manufacttured bUnion Camp). The plasticizer has the following properties: specific gravity = 1.088; viscosity at 77°F. = 5600 centistokes.

(4) Parts by weight.

(5) This value exceeds the limits of smoke detection of the Smoke Density Chamber. Therefore, the percent smoke reductions of the samples containing zinc oxide represent minimum values.

This example shows that substantial smoke retardation is obtained at 5 parts ZnO per 45 parts elastomer, that smoke retardation increases with increasing ZnO concentration, and that the effectiveness of ZnO at 20 parts per 45 parts is significantly greater than at 10 parts per 45 parts or less.

Thus although zinc oxide has generally been used at relatively low concentrations, i.e., less than five parts per hundred, by weight, as a component of the curative systems for many elastomers, it has surprising-

ly been found that zinc oxide at somewhat higher concentrations, i.e., greater than 5 parts per hundred of elastomer by weight, preferably greater than 10 parts per hundred by weight, and more preferably greater than 20 parts per hundred by weight, is extremely effective as a smoke retardant.

Claims

1. A composition characterised in that it comprises 90 to 50 parts by weight of an elastomeric polymer component, correspondingly 10 to 50 parts by weight of a halogen-containing organic component, and zinc oxide present in an amount equal to at least 5 parts by weight per hundred parts by weight of said elastomeric polymer component and said halogen-containing organic component.

2. A composition according to claim 1 characterised in that said zinc oxide is present in an amount equal to at least 10 parts by weight per hundred parts by weight of said elastomeric polymer component and said halogen-containing organic component.

3. A composition according to claim 1 or claim 2 characterised in that said elastomer polymer component is a polyurethane or a nitrile-butadiene rubber.

4. A composition according to any of the preceding claims characterised in that said halogen-containing organic component is at least one compound selected from polyvinyl chloride, chlorinated polyethylene and chlorinated paraffins.

5. A composition according to any of the preceding claims characterised in that it comprises an effective amount of a flame retardant.

6. A composition according to any of the preceding claims characterised in that it also comprises 5 to 20 parts by weight of antimony trioxide per hundred parts by weight of said elastomeric polymer component and said halogen-containing organic component.

7. A composition according to claim 6 characterised in that it also comprises an effective amount of a flame retardant other than antimony trioxide.

8. A composition according to claim 1 characterised in that it consists essentially of 90 to 50 parts by weight of an elastomeric polymer component, correspondingly 10 to 50 parts by weight of a halogen-containing organic component, and zinc oxide present in an amount equal to at least 5 parts by weight per hundred parts by weight of said elastomeric polymer component and said halogen-containing organic component.

9. A method of imparting the property of exhibiting substantially reduced smoke generation upon burning to a polymer composition characterised in that in a composition comprising 90 to 50 parts by weight of an elastomeric polymer component and correspondingly 10 to 50 parts by weight of a halogen-containing organic component, there is included an amount of zinc oxide equal to at least 5 parts by weight per hundred parts by weight of said elastomeric polymer component and said halogen-containing organic component.

0004175

European Patent Office

**EUROPEAN SEARCH REPORT**

Application number

EP 79 30 0335

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | C 08 L 101/00// C 08 L 101/00, 27/06, 23/28 C 08 K 3/22, 5/02) C 08 L 9/02 75/04 |
| | GB - A - 1 429 552 (GAF) <br> * Page 2, lines 87-88; claims * <br><br> -- <br><br> GB - A - 1 484 441 (HOOKER) <br> * Claims * <br><br> -- <br><br> FR - A - 2 165 005 (SAINT-GOBAIN) <br> * Page 2, line 29; claims * <br><br> -- <br><br> US - A - 3 876 571 (DAVID S. COBBLEDICK) <br> * Claims * <br><br> ---- | 1-9 <br><br><br><br> 1-9 <br><br><br><br><br> 1-9 <br><br><br><br> 1-9 | |
| | | | TECHNICAL FIELDS SEARCHED (Int.Cl.³) <br><br> C 08 L 101/00 57/00 C 08 K 3/00 3/22 5/00 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |
| | The present search report has been drawn up for all claims | | |

| Place of search | Date of completion of the search | Examiner |
|---|---|---|
| The Hague | 15-06-1979 | LENSEN |

EPO Form 1503.1  06.78